# NEUE EUROPÄISCHE PATENTSCHRIFT

(11) **EP 1 274 585 B2**
(45) Veröffentlichungstag und Bekanntmachung des Hinweises auf die Entscheidung über den Einspruch: **11.10.2017**
(45) Hinweis auf die Patenterteilung: 04.05.2005
(21) Anmeldenummer: 01917018.2
(22) Anmeldetag: 22.02.2001
(51) Int. Cl.: B41M 3/14, B42D 15/00, D21H 21/40, G06K 19/06

(54) **VERFAHREN ZUR HERSTELLUNG LASERBESCHRIFTBARER DATENTRÄGER UND DAMIT HERGESTELLTE DATENTRÄGER**
METHOD FOR PRODUCING LASER-WRITABLE DATA CARRIERS AND DATA CARRIER PRODUCED ACCORDING TO THIS METHOD
PROCEDE DE PRODUCTION DE SUPPORTS DE DONNEES POUVANT ETRE MARQUES AU LASER ET SUPPORTS DE DONNEES CORRESPONDANTS

(30) Priorität: 25.02.2000 DE 10008851
(43) Veröffentlichungstag der Anmeldung: 15.01.2003
(73) Patentinhaber: Giesecke & Devrient GmbH, 81677 München (DE)
(72) Erfinder: BRAUN, Eckhard, 63110 Rodgau (DE)
(74) Vertreter: Höhfeld, Jochen
(86) Internationale Anmeldenummer: PCT/EP2001/002036
(87) Internationale Veröffentlichungsnummer: WO 2001/062509

(56) Entgegenhaltungen:
- EP-A- 0 216 947
- EP-A- 0 892 362
- EP-A1- 0 678 400
- EP-B1- 0 741 370
- WO-A-97/19818
- WO-A1-99//46133
- DE-A- 19 530 495
- DE-A1- 3 048 735
- DE-A1- 3 942 663
- DE-A1- 19 618 569
- GB-A- 2 130 526
- GB-A- 2 242 161
- JP- - 7 186 577
- US- - 4,8 56, 857
- US-A- 4 544 181
- US-A- 5 944 356
- US-A- 5,3 40, 628
- US-A- 5,8 43, 547
- EU-Kartenführerschein, Sicherheitsmerkmale; Bundesdruckerei (http://www.bundesdruckerei.de/de/iddok/2_2 /merkmale.htm)
- Der neue EU-Führerschein und das neue Fahrerlaubnisrecht; Bundesministerium für Verkehr, Bau und Wohnungswesen (http://www.bmvbs.de/dokumente/,-1434/Artik el/dokument.htm)
- Intelligent und fälschungssicher: Der Musterführerschein der Bundesdruckerei; Bundesdruckerei (http://www.bundesdruckerei.de/de/support/d ownload/speci_fue.pdf)
- DORFNER K.: 'Pearl lustre pigments-characteristics and functional effects' SPECIALITY CHEMICALS, PRODUCTION, MARKETING AND APPLICATIONS Mai 1982,
- ZORLL U.: 'Römpp- Lacke und Druckfarben', Bd. 10. AUFL, 1998, GEORG THIEME VERLAG, STUTTGART Seite 357

## Beschreibung

Die Erfindung betrifft ein Verfahren zur Herstellung eines Datenträgers, insbesondere von Ausweiskarten, Wertpapieren und dergleichen, in dem die Datenträger mit einem Sicherheitselement versehen werden, das eine optisch variable Schicht aufweist und durch Laserbestrahlung erzeugte Markierungen umfasst sowie nach dem Verfahren hergestellte Datenträger.

Aus der WO 97/19818 ist es bekannt, Datenträger mit einer Information zu bedrucken, die in einer zum Datenträger kontrastierenden Farbe wiedergegeben werden. Die entsprechend bedruckten Bereiche werden anschließend mit einer lichtdurchlässigen, optisch variablen Schicht belegt, wobei der optisch variable Effekt dieser Schicht nur in den Bereichen deutlich hervortritt, in denen die aufgedruckte Information einen dunklen und damit absorbierenden Untergrund bildet. Unter einem optisch variablen Effekt wird verstanden, dass unter unterschiedlichen Betrachtungswinkeln unterschiedliche visuelle Eindrücke, wie beispielsweise unterschiedliche Farben oder Farbtöne erzeugt werden. Dieses Verfahren hat den Nachteil, dass für die Erzeugung des absorbierenden Untergrunds und der optisch variablen Schicht mehrere Druckvorgänge nötig sind, gegebenenfalls mit dazwischen liegenden Trocknungsperioden. Sofern durch die aufgedruckten Informationen wichtige schützenswerte Daten wiedergegeben werden, weisen die nach diesem Verfahren hergestellten Datenträger nur einen geringen Schutz gegen Fälschung und Manipulation auf, da die aufgedruckten Informationen leicht zugänglich und manipulierbar sind.

DE 195 3 495 A beschreibt verschiedene Herstellverfahren für einen Datenträger mit einer transparenten Schicht, die eine Oberflächenstruktur in Form einer Linsenstruktur aufweist, und durch die hindurch mittels Laserstrahlung auf eine darunterliegende Schicht Markierungen aufgebracht werden können.

EP 0 216 947 A beschreibt einen Datenträger mit einer transparenten Abdeckfolie, durch die hindurch mittels Laserstrahlung Informationen auf das darunter liegende Substrat aufgebracht werden, wobei die Abdeckfolie ein Relief aufweist, das zumindest teilweise sich mit den aufgebrachten Informationen überlappt.

EP 0 892 362 A beschreibt Datenträger mit auf unterschiedliche Arten individualisierten Hologrammen, wobei bei einer Variante das Hologramm mittels eines Lasers individualisiert wird.

Aus GB 2 242161 A ist ein Sicherheitsdokument bekannt, das unter einer Schutzschicht eine Schicht aufweist, die Substanzen enthält, die mittels Laserstrahlung aktivierbar sind, so dass sie irreversibel ihre Farbe ändern.

US 5 944 356 A beschreibt einen Datenträger mit einer transparenten, nicht selbsttragenden Folie, die mittels Laserstrahlung mit einer irreversiblen Markierung versehen werden kann.

US 4 544 181 A beschreibt eine mehrschichtige Identifikationskarte, auf deren Kernschicht mittels Laserstrahl Markierungen aufgebracht werden.

Aufgabe der vorliegenden Erfindung ist es daher, ein einfacheres und damit auch wirtschaftlicheres Verfahren zur Herstellung von Datenträgern mit einem optisch variablen Sicherheitselement und danach hergestellte Datenträ-ger vorzuschlagen, die außerdem einen erhöhten Schutz gegen Fälschung und Manipulation bieten.

Diese Aufgabe wird durch die Merkmale der unabhängigen Ansprüche gelöst, wobei vorteilhafte Weiterbildungen dieser Lösung Gegenstand der abhängigen Ansprüche sind.

Das erfindungsgemäße Verfahren sieht vor, dass der Datenträger eine mittels Laserstrahlung markierbare Schicht aufweist. Unter Einwirkung von Laserstrahlung können in dieser Schicht kontraststarke und dadurch visuell gut sichtbare Markierungen erzeugt werden. Auf der dem Betrachter zugewandten Seite der markierbaren Schicht wird eine lichtdurchlässige Schicht mit optisch variablen Eigenschaften aufgebracht. Anschließend werden die visuell sichtbaren Markierungen mit einem Laserstrahl in die markierbare Schicht eingeschrieben, wobei der Laserstrahl zumindest bei einem Teil der erzeugten Markierungen durch die darüber liegende optisch variable Schicht hindurchwirkt. Während die optisch variable Schicht für die Laserstrahlung weit gehend transparent ist und bei geeignet gewählter Intensität durch die Laserbestrahlung nicht verändert wird, wird die Strahlenergie in der markierbaren Schicht absorbiert, wodurch die bestrahlten Bereiche der markierbaren Schicht eine Farbänderung erfahren und visuell gut wahrnehmbare Markierungen bilden.

Da die optisch variable Schicht lichtdurchlässig ist, wird ihr optischer Eindruck stark durch den Untergrund beeinflusst. Die durch Laserbeschriftung erzeugten Markierungen sind vorzugsweise dunkel oder schwarz, so dass die durch die optisch variable Schicht hindurchtretende Strahlung weit gehend bis völlig absorbiert wird. Daher tritt der in Reflexion beobachtbare optisch variable Effekt der darüber liegenden optisch variablen Schicht im Bereich der Markierungen besonders stark hervor, während die optisch variable Schicht in der Umgebung der Markierungen, insbesondere vor einem hellen oder weißen Hintergrund kaum in Erscheinung tritt.

Da die optisch variable Schicht für die verwendete Laserstrahlung transparent ist, bietet das erfindungsgemäße Verfahren den weiteren Vorteil, dass die Markierungen nach dem Aufbringen der optisch variablen Schicht durch diese hindurch in den Datenträger eingeschrieben werden können. Auf diese Weise können Datenträgerrohlinge mit einer einheitlichen, für alle Datenträger identischen, optisch variablen Schicht versehen werden. Der absorbierende Untergrund, der den optischen Effekt der optisch variablen Schicht deutlich sichtbar werden lässt, kann nachträglich erzeugt werden, so dass der Informationsgehalt des absorbierenden Untergrunds erst zu einem sehr späten Zeitpunkt festgelegt und jedem Datenträger zugeordnet werden muss. Aufgrund der einfachen und flexiblen Steuerbarkeit des Laserstrahls kann das erfindungsgemäße Sicherheitsmerkmal jedes Datenträgers kostengünstig und einfach mit individuellen Markierungen, d.h. einem individuellen absorbierenden Untergrund versehen werden.

Das erfindungsgemäße Verfahren weist darüber hinaus alle Vorteile und Vorzüge der Laserbeschriftung auf. Die entsprechend erzeugten Markierungen können sicher und dauerhaft in das Volumen des Datenträgers eingebracht werden und liegen nicht an der Oberfläche vor, wie dies bei einfachen Aufdrucken der Fall ist. Die mittels Laserstrahlung erzeugten Markierungen sind daher in besonderem Maße vor Manipulationen geschützt und die erfindungsgemäßen Datenträger insgesamt fälschungssicherer als solche, die mit konventionellen Drucktechniken hergestellt wurden. Die Laserbeschriftung wird bevorzugt eingesetzt, um personenbezogene Daten des Inhabers einer Ausweiskarte oder eines Wertpapiers zu erzeugen. Das erfindungsgemäße Verfahren eignet sich auch insbesondere zum Aufbringen datenträgerspezifischer, individueller Kennzeichnungen, wie z.B. Seriennummern. Da die Personalisierung oder Individualisierung des Datenträgers mit dem erfindungsgemäßen Verfahren als letzter Arbeitsschritt durchgeführt werden kann, gelangen bei entsprechender Kontrolle nur fehlerfrei vorproduzierte Datenträgerrohlinge zur Personalisierung oder Individualisierung. Unterläuft bei der Personalisierung ein Fehler, so kann der Personalisierungsvorgang, da er als letzter Arbeitsschritt ausgeführt wird, mit geringem Aufwand an einem Datenträgerrohling der gleichen Serie wiederholt werden. Das sehr aufwändige und damit kostenintensive Reproduzieren eines schon mit individuellen Informationen versehenen Datenträgers in einem mehrstufigen Produktions- und Individualisierungsprozess kann entfallen.

Da die Individualisierung eines Datenträgers mittels Laserbeschriftung erst unmittelbar vor der Ausgabe des Datenträgers erfolgen kann, können darüber hinaus risikoreiche Transport- und Versandwege zwischen örtlich getrennten Individualisierungs- und Ausgabestellen entfallen. Das erfindungsgemäße Verfahren erlaubt darüber hinaus eine Reduzierung der Vorratshaltung an noch nicht individualisierten Datenträgern. Es muss lediglich die gewünschte Anzahl an Grundtypen von Datenträgern bevorratet werden, die dann durch Einbringung beispielsweise von Logos, Symbolen, Seriennummern und dergleichen mittels Laserbeschriftung so markiert werden, dass erst während des letzten Arbeitsschrittes eine Unterteilung in Unteroder Teilgruppen oder Kleinserien erfolgt. Beispielsweise kann ein Unternehmen an einer zentralen Ausgabestelle lediglich einen Grundtyp eines Firmenausweises bevorraten und durch das Einbringen gruppenspezifischer Zeichen oder Symbole die Zugehörigkeit des Ausweisinhabers zu verschiedenen Tochterunternehmen oder Abteilungen kenntlich machen, ohne dass für jedes Tochterunternehmen oder jede Abteilung ein anderer Typ von Betriebsausweis bzw. Kartenrohling vorrätig gehalten werden muss.

Gestaltungsmerkmale, die alle Datenträger aufweisen sollen, können bereits in den der Individualisierung mittels Laserbeschriftung vorangehenden Arbeitsschritten auf- oder eingebracht werden. Für diese Arbeitsschritte, wie beispielsweise das Aufdrucken eines einheitlichen Hintergrundmusters können dann besonders wirtschaftliche und großserientaugliche Verfahren und Techniken eingesetzt werden.

Das erfindungsgemäße Verfahren eignet sich insbesondere für Datenträger, wie Ausweis-, Mitglieds-, Kredit- und Geldkarten, Führerscheine und andere Wertpapiere und Sicherheitsdokumente, wie Banknoten, die derart mit Informationen oder Daten versehen werden sollen, dass sie mit gängigen Mitteln nicht nachgeahmt werden können und auch vor Manipulationsversuchen geschützt sind. Die Laserbeschriftung des Datenträgers erfolgt vorzugsweise als letzter abschließender Bearbeitungsschritt vor seiner Ausgabe und eignet sich in besonderer Weise zur Einbringung von Informationen, die den Datenträger innerhalb einer Serie von gleichen Datenträgern individualisiert. Die mittels Laserstrahlung eingebrachten Markierungen geben beispielsweise personenbezogene Daten, wie Namen, Geburtsdatum, Adresse oder Personalnummer wieder, können aber auch eine Seriennummer, eine Unterschrift oder ein Portraitbild darstellen oder Hoheitszeichen, Rangabzeichen oder Firmenlogos wiedergeben.

Die optisch variable Schicht ist lichtdurchlässig. D.h., die den optisch variablen Effekt erzeugenden Materialien sowie eventuell zusätzlich vorhandenen Füll-, Binde- oder Trägerstoffe sind zumindest für den visuell wahrnehmbaren Spektralbereich und die Hauptemissionswellenlängen der verwendeten Laserstrahlung weit gehend transparent. Als optisch variable Materialien dienen vernetzte Flüssigkristallpolymere, die als kompakte Schicht oder in Form von Pigmenten vorliegen können.

Um die Handhabung und Einbringung bzw. Aufbringung in/auf den Datenträger zu erleichtern, werden die kompakten Flüssigkristallschichten vorzugsweise auf einer dünnen transparenten Kunststoffträgerschicht verarbeitet, während Pigmente zusammen mit transparenten Kunststoffen zu Folien oder Lacken verarbeitet werden.

In jedem Fall ist jedoch zu beachten, dass die verwendeten Pigmente oder sonstigen optisch variablen Materialien keine oder nur eine geringe Eigen- oder Körperfarbe besitzen. Die Möglichkeiten bei der Darstellung und Wiedergabe von Informationen werden noch erhöht, wenn die Fläche bzw. der Umriss der optisch variablen Beschichtung ein Zeichen, Logo oder Symbol wiedergibt. Zur Aufbringung der optisch variablen Schicht eignen sich insbesondere das Sieb-, Transfer- und Tampondruckverfahren. Auch Prägefolien können hierfür verwendet werden.

Liegt das optisch variable Material als kompakte Schicht vor, kann es in vorteilhafter und einfacher Weise auf den Datenträger aufgeklebt werden. In diesem Fall ist zu beachten, dass durch die Klebung ein nichtlösbarer Verbund zwischen der aufgeklebten Schicht und dem Datenträger entsteht.

Datenträger mit einer optisch variablen Beschichtung weisen auch einen wirksamen Kopierschutz auf, da der betrachtungswinkelabhängige visuelle Effekt durch gängige Reproduktionsverfahren, wie Fotokopieren und Aufdrucke mit konventionellen Druckfarben nicht wiedergegeben werden kann.

Zum Schutz vor Umwelteinflüssen, Abrieb und mechanischer Beschädigung wird die optisch variable Schicht vorzugsweise mit einer transparenten Schutz- oder Deckschicht abgedeckt. Zu diesem Zweck wird als äußere abschließende Schicht eine transparente Lackschicht oder Kunststofffolie aufgebracht. Im Falle von Schutzfolien werden diese bevorzugt durch Heißlaminieren unter Einwirkung von Druck und Hitze mit dem Datenträger dauerhaft und sicher verbunden.

Weitere Vorteile und Weiterbildungen der Erfindung ergeben sich aus den abhängigen Ansprüchen und der nachfolgenden Beschreibung bevorzugter Ausführungsbeispiele:

Es zeigen:
- Fig. 1: eine Aufsicht auf einen erfindungsgemäßen kartenförmigen Datenträger,
- Fig.2: einen Schnitt durch den Schichtaufbau eines erfindungsgemäßen Datenträgers,
- Fig. 3: einen Schnitt durch einen weiteren erfindungsgemäßen Datenträger,
- Fig. 4: einen erfindungsgemäßen Datenträger in Form einer Banknote.

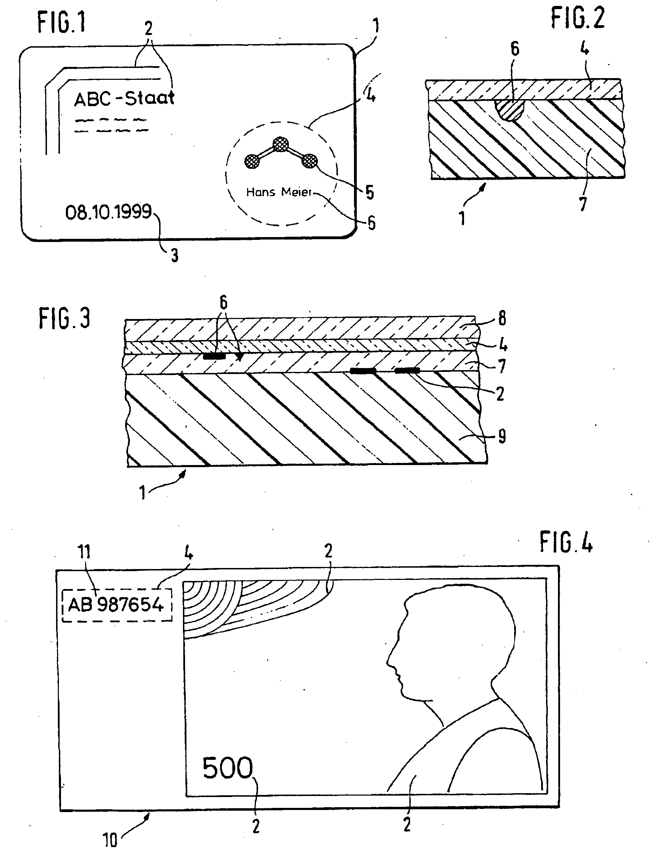

Fig. 1 stellt eine Ausweiskarte 1 in Aufsicht dar. Der Kartengrundkörper ist mit allgemeinen, nichtindividuellen Daten 2 bedruckt. Weitere Daten 3 geben das Ausstellungsdatum wieder und wurden mittels Laserbeschriftung eingebracht. Der von einer unterbrochenen Linie umrandete Bereich wurde mit einer optisch variablen Schicht 4 belegt. Durch die optisch variable Schicht hindurch sind mittels Laserbeschriftung eingebrachte Markierungen 5, 6 sichtbar, die ein Logo 5 und den Namen 6 des Ausweisinhabers wiedergeben. Die durch Laserstrahleinwirkung erzeugten Markierungen 3, 5 und 6 sind schwarz und stark absorbierend für das Licht des sichtbaren Spektralbereichs. Sie heben sich mit visuell gut wahrnehmbarem Kontrast vor dem hellen Hintergrund des Kartengrundkörpers ab. Vor diesem hellen Hintergrund hebt sich die lichtdurchlässige, optisch variable Schicht 4 dagegen kaum ab und ist in den unmarkierten Bereichen nur schlecht wahrnehmbar. Lediglich in den Bereichen, in denen die Markierungen 5, 6 einen dunklen, absorbierenden Hintergrund bilden, ist die optisch variable Schicht mit bloßem Auge gut wahrnehmbar und erzeugt unter verschiedenen Betrachtungswinkeln unterschiedliche Farbeindrücke. Werden spezielle Flüssigkristallpigmente verwendet, so erscheinen die Markierungen 5, 6 bei senkrechter Betrachtung beispielsweise in grüner Farbe, während sie bei flachem Betrachtungswinkel in blauer oder schwarzer Farbe wahrgenommen werden. Die allgemeinen Druckdaten 2 und das mittels Laserbeschriftung erzeugte Ausstellungsdatum 3 scheinen dagegen unabhängig vom Betrachtungswinkel immer gleich, da sie in einem Teilbereich erzeugt wurden, der nicht mit einer optisch variablen Schicht 4 überdeckt ist.

Fig. 2 zeigt den Schichtaufbau eines bevorzugten sehr einfach aufgebauten Datenträgers 1. Der Grundkörper des Datenträgers 1 besteht aus einer selbsttragenden Schicht 7, die vorzugsweise aus Kunststoff besteht und durch Beimengung geringer Mengen von Substanzen, die für die Wellenlänge des Beschriftungslasers stark absorbierend sind, sensibilisiert sein kann. Auf der mittels Laserstrahlung markierbaren Schicht 7 befindet sich eine optisch variable Schicht 4. Durch Einwirkung eines Laserstrahls durch die weit gehend transparente Schicht 4 hindurch wurde in der markierbaren Schicht 7 eine dunkle, absorbierende Markierung 6 erzeugt. Nur im Bereich der Markierung 6 tritt der betrachtungswinkelabhängige Effekt der optisch variablen Schicht 4 deutlich wahrnehmbar auf. Ist die markierbare Schicht 7 für Wellenlängen des sichtbaren Spektralbereichs weit gehend transparent, lässt sich eine Markierung 6 grundsätzlich auch durch eine Laserbestrahlung der Seite des Datenträgers erzeugen, die nicht mit der optisch variablen Schicht 4 versehen wurde.

Ein Querschnitt durch den Schichtaufbau eines weiteren bevorzugten Datenträgers ist in Fig. 3 dargestellt, wobei diese Figur, ebenso wie Fig. 2 eine Prinzipskizze darstellt, die nicht notwendigerweise die richtigen Schichtdickenverhältnisse wiedergibt. Der dargestellte Ausschnitt aus einem Datenträger 1 besteht aus der Trägerschicht 9, die bevorzugt als opake Schicht ausgeführt und weiß eingefärbt wird. Als Material für die Trägerschicht kommen vor allem die in der Kartenproduktion üblichen Kunststofffolienmaterialien infrage. Auch die Verwendung von Papier, insbesondere Sicherheitspapier ist möglich. Auf die Trägerschicht 9 wurden allgemeine Druckdaten 2 aufgebracht. Auf der Trägerschicht 9 befindet sich die mittels Laserstrahlung markierbare Schicht 7, die im vorliegenden Beispiel als dünne transparente Folie ausgebildet ist. Auf der dem Betrachter zugewandten Seite der Schicht 7 befindet sich die optisch variable Schicht 4. Die Schicht 4 wird beispielsweise als Lackschicht, in der optisch variable Pigmente enthalten sind, im Siebdruckverfahren aufgedruckt. Den Abschluss bildet eine außen liegende transparente Schutzschicht 8, die darunter liegende Schichten vor Umwelteinflüssen, mechanischen Beschädigungen und Abrieb schützt. Die Schutzschicht 8 wird vorzugsweise durch Heißlaminieren aufgebracht. Gegebenenfalls können zur Verbesserung der Haftung zwischen den einzelnen Schichten zusätzliche Kleberschichten, insbesondere Heißkleberschichten vorgesehen werden. Nach Fertigstellung des Schichtaufbaus können in der markierbaren Schicht 7 durch Laserbestrahlung die Markierungen 6 erzeugt werden, die von der Kartenoberfläche aus nicht zugänglich sind, da sie im Inneren bzw. im Volumen des Datenträgers erzeugt werden. Da die Schichten 8, 4 und 7 transparent sind, sind die Lasermarkierungen 6 ebenso wie die Druckdaten 2 für den Betrachter gut erkennbar.

Fig. 4 zeigt einen erfindungsgemäßen Datenträger 10 in Form einer Banknote. Das bedruckte Banknotensubstrat besteht vorzugsweise aus Sicherheitspapier und wurde mit den im Banknotendruck üblichen Druckverfahren mit allgemeinen, nicht individuellen Daten 2 bedruckt, die in Fig. 4 die Wertzahl 500, ein Portraitbild und ein Hintergrundmuster wiedergeben. Jede einzelne Banknote wird durch eine Seriennummer 11 individualisiert, die mittels Laserbeschriftung erzeugt wurde. Der Bereich, in dem die Seriennummer 11 vorliegt, weist die optisch variable Schicht 4 auf. Um die Laserbeschriftung durchführen zu können, wird zumindest in dem Bereich, in dem die Seriennummer vorgesehen ist, das Banknotensubstrat, also der Datenträgergrundkörper mit einer lasermarkierbaren Beschichtung versehen. Dies kann beispielsweise durch das Aufbringen eines Lackes geschehen, der z.B. durch Zugabe geringer Mengen feinster Rußpigmente für Laserstrahlung sensibilisiert wurde. Es ist auch möglich, das Material des Grundkörpers in geeigneter Weise auszuwählen oder durch geeignete Zusätze so zu modifizieren, dass es ohne zusätzliche Beschichtung selber mit Laserstrahlen markiert bzw. beschriftet werden kann.

## Patentansprüche

1. Verfahren zur Herstellung eines Datenträgers (1, 10) mit einem optisch variablen Sicherheitselement, das wenigstens eine visuell erkennbare Markierung (5, 6, 11) und wenigstens eine lichtdurchlässige, optisch variable Schicht (4) aufweist, wobei die optisch variable Schicht ein einen optisch variablen Effekt erzeugendes Material umfasst und zumindest in Teilbereichen überlappend zu der Markierung angeordnet ist, **dadurch gekennzeichnet, dass** die lichtdurchlässige, optisch variable Schicht (4) auf den Datenträger aufgebracht wird, und anschließend durch die optisch variable Schicht hindurch in einer lasermarkierbaren Schicht (7) des Datenträgers die Markierung (5, 6, 11) durch die Einwirkung eines Laserstrahls erzeugt wird, wobei das den optisch variablen Effekt erzeugende Material vernetzte Flüssigkristallpolymere sind, die als kompakte Schicht oder in Form von Pigmenten vorliegen, und wobei die optisch variable Schicht (4) durch die Laserbestrahlung nicht verändert wird.

2. Verfahren nach Anspruch 1, **dadurch gekennzeichnet, dass** die optisch variable Schicht (4) aufgedruckt wird.

3. Verfahren nach Anspruch 2, **dadurch gekennzeichnet, dass** es sich bei dem Druckverfahren um Siebdruck, Transferdruck oder Tampondruck handelt.

4. Verfahren nach Anspruch 1 bis 3, **dadurch gekennzeichnet, dass** der Datenträger (1) zusätzlich mit einer transparenten Schutzschicht (8) versehen wird.

5. Verfahren nach Anspruch 4, **dadurch gekennzeichnet, dass** die optisch variable Schicht (4) zwischen dem Grundkörper (9) des Datenträgers und der transparenten Schutzschicht (8) einlaminiert wird.

6. Verfahren nach einem der Ansprüche 1 bis 5, **dadurch gekennzeichnet, dass** die optisch variable Schicht (4) vollflächig oder nur auf eine Teilfläche des Datenträgers (1, 10) aufgebracht wird.

7. Verfahren nach Anspruch 1 bis 5, **dadurch gekennzeichnet, dass** die optisch variable Schicht (4) in der Umrissform eines Symbols, Zeichens oder Logos aufgebracht wird.

8. Verfahren nach einem der Ansprüche 1 bis 7, **dadurch gekennzeichnet, dass** die optisch variable Schicht (4) als Lackschicht oder Folie aufgebracht wird, die die optisch variablen Pigmente enthält.

9. Verfahren nach Anspruch 1 bis 8, **dadurch gekennzeichnet, dass** zum Erzeugen der Markierung (5, 6, 11) ein Laser verwendet wird, dessen Hauptemissionswellenlänge im infraroten oder sichtbaren Spektralbereich liegt.

10. Verfahren nach Anspruch 1 bis 9, **dadurch gekennzeichnet, dass** mit dem Laserstrahl eine dunkle, insbesondere schwarze Markierung (5, 6, 11) erzeugt wird, die in gut sichtbarem Kontrast zu ihrer unmittelbaren Umgebung steht.

11. Datenträger (1, 10), insbesondere Ausweiskarte oder Wertpapier, der eine lichtdurchlässige, optisch variable Schicht (4) und eine weitere, mittels Laserstrahlung durch die optisch variable Schicht hindurch markierbare Schicht (7) aufweist, wobei die markierbare Schicht (7) durch Laserbeschriftung erzeugte, visuell erkennbare Markierungen (5, 6, 11) aufweist, und die optisch variable Schicht (4) ein einen optisch variablen Effekt erzeugendes Material umfasst und auf der dem Betrachter zugewandten Seite der lasermarkierbaren Schicht angeordnet ist und zumindest in Teilbereichen mit den Markierungen (5, 6, 11) überlappt, wobei das den optisch variablen Effekt erzeugende Material vernetzte Flüssigkristallpolymere sind, die als kompakte Schicht oder in Form von Pigmenten vorliegen und wobei die optisch variable Schicht bei geeignet gewählter Intensität einer Laserstrahlung durch die Laserbestrahlung nicht verändert wird, während die Strahlenenergie in der markierbaren Schicht (7) absorbiert wird, wodurch die bestrahlten Bereiche der markierbaren Schicht eine visuell wahrnehmbare Farbveränderung erfahren.

12. Datenträger (1, 10) nach Anspruch 11, **dadurch gekennzeichnet, dass** die Markierungen (5, 6, 11) dunkel, insbesondere schwarz sind und einen visuell gut wahrnehmbaren Kontrast zu ihrer unmittelbaren Umgebung bilden.

13. Datenträger (1, 10) nach Anspruch 11 oder 12, **dadurch gekennzeichnet, dass** die Markierungen (5, 6, 11) alphanumerische Zeichen, Bilder oder Logos darstellen.

14. Datenträger (1, 10) nach einem der Ansprüche 11 bis 13, **dadurch gekennzeichnet, dass** die Markierungen (5, 6, 11) benutzerbezogene Daten wiedergeben.

15. Datenträger (1, 10) nach einem der Ansprüche 11 bis 14, **dadurch gekennzeichnet, dass** der Datenträger (1, 10) eine Banknote ist und die Markierungen (5, 6, 11) eine Seriennummer (11) wiedergeben.

16. Datenträger (1, 10) nach einem der Ansprüche 11 bis 15, **dadurch gekennzeichnet, dass** die optisch variable Schicht (4) den Datenträger (1, 10) vollflächig oder in einer Teilfläche bedeckt.

17. Datenträger (1, 10) nach Anspruch 16, **dadurch gekennzeichnet, dass** die optisch variable Schicht (4) in der Umrissform eines Zeichens, Logos oder Symbols aufgebracht ist.

18. Datenträger (1, 10) nach einem der Ansprüche 11 bis 17, **dadurch gekennzeichnet, dass** er eine außen liegende transparente Schutzschicht (8) aufweist.

19. Datenträger (1, 10) nach Anspruch 18, **dadurch gekennzeichnet, dass** die optisch variable Schicht (4) zwischen der transparenten Schutzschicht (8) und dem Grundkörper (9) des Datenträgers einlaminiert ist.

20. Datenträger (1, 10) nach einem der Ansprüche 11 bis 19, **dadurch gekennzeichnet, dass** die optisch variable Schicht (4) von einer lichtdurchlässigen Lackschicht oder Folie gebildet wird, die die optisch variablen Pigmente enthält.

## Claims

1. A method for producing a data carrier (1, 10) with an optically variable security element having at least one visually recognizable marking (5, 6, 11) and at least one transparent optically variable layer (4), the optically variable layer comprising a material that produces an optically variable effect and being disposed in overlap with the marking at least in partial areas, **characterized in that** the transparent optically variable layer (4) is applied to the data carrier, and the marking (5, 6, 11) is then produced in a laser-markable layer (7) of the data carrier through the optically variable layer by the action of a laser beam, the material that produces an optically variable effect being crosslinked liquid crystal polymers which are present as a compact layer or in the form of pigments, and the optically variable layer (4) not being altered by the laser radiation.

2. A method according to claim 1, **characterized in that** the optically variable layer (4) is printed on.

3. A method according to claim 2, **characterized in that** the printing process is screen printing, transfer printing or ink dabber printing.

4. A method according to claims 1 to 3, **characterized in that** the data carrier (1) is additionally provided with a transparent protective layer (8).

5. A method according to claim 4, **characterized in that** the optically variable layer (4) is laminated in between the base (9) of the data carrier and the transparent protective layer (8).

6. A method according to any of claims 1 to 5, **characterized in that** the optically variable layer (4) is applied all over or only to a partial area of the data carrier (1, 10).

7. A method according to claims 1 to 5, **characterized in that** the optically variable layer (4) is applied in the outline form of a symbol, character or logo.

8. A method according to any of claims 1 to 7, **characterized in that** the optically variable layer (4) is applied as a lacquer layer or foil containing the optically variable pigments.

9. A method according to claims 1 to 8, **characterized in that** the marking (5, 6, 11) is produced using a laser whose main emission wavelength is in the infrared or visible spectral region.

10. A method according to claims 1 to 9, **characterized in that** the laser beam produces a dark, in particular black, marking (5, 6, 11) that is in readily visible contrast with its immediate surroundings.

11. A data carrier (1, 10), in particular ID card or paper of value, having a transparent optically variable layer (4) and a further layer (7) markable through the optically variable layer by laser radiation, the markable layer (7) having visually recognizable markings (5, 6, 11) produced by laser inscription, and the optically variable layer (4) comprising a material that produces an optically variable effect and being disposed on the side of the laser-markable layer facing the viewer and overlapping with the markings (5, 6, 11) at least in partial areas, the material that produces an optically variable effect being crosslinked liquid crystal polymers which are present as a compact layer or in the form of pigments, and the optically variable layer not being altered by the laser irradiation when the intensity is selected suitably, while the beam energy is absorbed in the markable layer (7) so that the irradiated areas of the markable layer undergo a visually perceptible color change.

12. A data carrier (1, 10) according to claim 11, **characterized in that** the markings (5, 6, 11) are dark, in particular black, and form a visually well perceptible contrast with their immediate surroundings.

13. A data carrier (1, 10) according to claim 11 or 12, **characterized in that** the markings (5, 6, 11) represent alphanumeric characters, images or logos.

14. A data carrier (1, 10) according to any of claims 11 to 13, **characterized in that** the markings (5, 6, 11) render user-related data.

15. A data carrier (1, 10) according to any of claims 11 to 14, **characterized in that** the data carrier (1, 10) is a bank note and the markings (5, 6, 11) render a serial number (11).

16. A data carrier (1, 10) according to any of claims 11 to 15, **characterized in that** the optically variable layer (4) covers the data carrier (1, 10) all over or in a partial area.

17. A data carrier (1, 10) according to claim 16, **characterized in that** the optically variable layer (4) is applied in the outline form of a character, logo or symbol.

18. A data carrier (1, 10) according to any of claims 11 to 17, **characterized in that** it has an external transparent protective layer (8).

19. A data carrier (1, 10) according to claim 18, **characterized in that** the optically variable layer (4) is laminated in between the transparent protective layer (8) and the base (9) of the data carrier.

20. A data carrier (1, 10) according to any of claims 11 to 19, **characterized in that** the optically variable layer (4) is formed by a transparent lacquer layer or foil containing the optically variable pigments.

## Revendications

1. Procédé de fabrication d'un support de données (1, 10), avec un élément de sécurité variable optiquement, qui présente au moins un marquage (5, 6, 11) identifiable visuellement et au moins une couche (4) variable optiquement, transparente à la lumière, la couche variable optiquement, comprenant un matériau produisant un effet optiquement variable, et étant disposée au moins dans deux zones partielles, en chevauchement du marquage, **caractérisé en ce que** la couche (4) variable optiquement, transparente à la lumière, est appliquée sur le support de données et, ensuite, à travers la couche variable optiquement, dans une couche (7) marquable par laser, du support de données, le marquage (5, 6, 11) est produit par l'effet d'un rayon laser, dans lequel le matériau produisant l'effet optiquement variable sont des polymères à cristaux liquides réticulés, se présentant sous la forme de couche compacte ou bien sous la forme de pigments, et la couche (4) variable optiquement n'étant pas modifiée par l'irradiation au laser.

2. Procédé selon la revendication 1, **caractérisé en ce que** la couche (4) variable optiquement est imprimée.

3. Procédé selon la revendication 2, **caractérisé en ce que**, concernant le procédé d'impression, il s'agit d'une impression sérigraphique, d'une impression par transfert, ou d'une impression au tampon.

4. Procédé selon les revendications 1 à 3, **caractérisé en ce que** le support de données (1) est en plus muni d'une couche protectrice (8) transparente.

5. Procédé selon la revendication 4, **caractérisé en ce que** la couche (4) variable optiquement est introduite au stade du laminage, entre le corps de base (9) du support de données et la couche protectrice (8) transparente.

6. Procédé selon l'une des revendications 1 à 5, **caractérisé en ce que** la couche (4) variable optiquement est appliquée sur toute la surface, ou seulement sur une surface partielle du support de données (1, 10).

7. Procédé selon les revendications 1 à 5, **caractérisé en ce que** la couche (4) variable optiquement est appliquée à la forme de contour d'un symbole, d'un caractère ou d'un logo.

8. Procédé selon l'une des revendications 1 à 7, **caractérisé en ce que** la couche (4) variable optiquement est appliquée sous forme de couche de vernis ou de feuille, contenant les pigments variables optiquement.

9. Procédé selon les revendications 1 à 8, **caractérisé en ce que**, pour produire le marquage (5, 6, 11), un laser est utilisé, dont la longueur d'onde d'émission principale est située dans la plage spectrale des infrarouges ou de la lumière visible.

10. Procédé selon les revendications 1 à 9, **caractérisé en ce qu'**on produit avec le rayon laser un marquage (5, 6, 11) sombre, en particulier noir, qui est en un contraste bien visible vis-à-vis de son environnement direct.

11. Support de données (1, 10), en particulier carte d'identité ou papier de valeur, présentant une couche (4) variable optiquement, transparente à la lumière et une autre couche (7), marquable au moyen d'un rayonnement laser à travers la couche variable optiquement, la couche (7) marquable présentant des marquages (5, 6, 11) identifiables visuellement, produits par inscription au laser, et la couche (4) variable optiquement comprenant un matériau produisant un effet variable optiquement et est disposée sur la face, tournée vers l'observateur, de la couche marquable au laser, et chevauche les marquages (5, 6, 11) au moins dans des zones partielles, dans lequel le matériau produisant l'effet optiquement variable sont des polymères à cristaux liquides réticulés, se présentant sous la forme de couche compacte ou bien sous la forme de pigments, et dans lequel la couche optiquement variable n'est pas modifiée par le rayonnement laser pour une intensité sélectionnée de façon appropriée, tandis que l'énergie de rayonnement est absorbée dans la couche marquable (7) faisant que les zones irradiées de la couche marquable subissent une modification de couleur et forment des marquages bien perceptibles visuellement.

12. Support de données (1, 10) selon la revendication 11, **caractérisé en ce que** les marquages (5, 6, 11) sont sombres, en particulier noirs, et forment un contraste bien perceptible visuellement par rapport à leur environnement direct.

13. Support de données (1, 10) selon la revendication 11 ou 12, **caractérisé en ce que** les marquages (5, 6, 11) constituent des caractères alphanumériques, des images ou des logos.

14. Support de données (1, 10) selon l'une des revendications 11 à 13, **caractérisé en ce que** les marquages (5, 6, 11) restituent des données se référant à l'utilisateur.

15. Support de données (1, 10) selon l'une des revendications 11 à 14, **caractérisé en ce que** le support de données (1, 10) est un billet de banque, et les marquages (5, 6, 11) restituent un numéro de série (11).

16. Support de données (1, 10) selon l'une des revendications 11 à 15, **caractérisé en ce que** la couche (4) optiquement variable couvre, en totalité ou en une zone partielle, le support de données (1, 10).

17. Support de données (1, 10) selon la revendication 16, **caractérisé en ce que** la couche (4) optiquement variable est appliquée à la forme de profil d'un caractère, d'un logo ou d'un symbole.

18. Support de données (1, 10) selon l'une des revendications 11 à 17, **caractérisé en ce qu'**il présente une couche protectrice (8) transparente, placée extérieurement.

19. Support de données (1, 10) selon la revendication 18, **caractérisé en ce que** la couche (4) optiquement variable est intégrée au stade du laminage, entre la couche protectrice (8) transparente et le corps de base (9) du support de données.

20. Support de données (1, 10) selon l'une des revendications 11 à 19, **caractérisé en ce que** la couche (4) optiquement variable est formée par une couche de vernis ou une feuille, transparente à la lumière, contenant les pigments optiquement variables.
